# EUROPEAN PATENT APPLICATION

(11) **EP 3 006 321 A1**
(43) Date of publication of application: **13.04.2016**
(21) Application number: 14804210.4
(22) Date of filing: 13.05.2014
(51) Int. Cl.: B63B 49/00, B63H 25/04

(54) **ENVIRONMENT INFORMATION DETECTION DEVICE FOR SHIPS, ROUTE SETTING DEVICE, ENVIRONMENT INFORMATION DETECTION METHOD FOR SHIPS, AND PROGRAM**

(30) Priority: 31.05.2013 JP 2013115905
(71) Applicant: Furuno Electric Co., Ltd., Nishinomiya-City, Hyogo 662-8580 (JP)
(72) Inventor: KAWANAMI, Satoshi, Nishinomiya-City Hyogo 662-8580 (JP)
(74) Representative: Müller Hoffmann & Partner
(86) International application number: PCT/JP2014/062660
(87) International publication number: WO 2014/192532

(57) **Abstract**

A ship environmental information detector, a route setting device, a method of detecting ship environmental information, and a program are provided, which are capable of more surely and accurately detecting environmental information in the vicinity of a ship. A ship environmental information detector 12 includes an ocean wave detecting module 14, a surface tidal current detecting module 15, and a controlling module 16. The ocean wave detecting module 14 is configured to detect an ocean wave in the vicinity of a ship 50. The surface tidal current detecting module 15 is configured to detect surface tidal currents 54 (541 and 542) in the vicinity of the ship 50. The controlling module 16 controls outputs of the detecting modules 14 and 15 based on the detection results of the detecting modules 14 and 15, respectively.

## Description

### TECHNICAL FIELD

This disclosure relates to a ship environmental information detector, a route setting device, a method of detecting ship environmental information, and a program.

### BACKGROUND ART

For example, ships travel on the sea. As information required for navigation, ships acquire hydrographic information in the vicinity of a ship concerned by using various sensors. Examples of such sensors include a sensor for measuring ocean waves, and a sensor for measuring tidal currents (e.g., see Patent Document 1).

### REFERENCE DOCUMENT(S) OF CONVENTIONAL ART

### Patent Document

Patent Document 1: JP2001-133548A

### DISCLOSURE OF THE INVENTION

### [Problems to be Solved by the Invention]

The ocean wave sensor is configured to detect a wave crest line on the sea, for example. However, depending on the observing situation, the ocean wave sensor may cause great error or not be able to observe the wave crest line in the first place. Specifically, when the wave crest line is short, the ocean wave sensor provided to the ship concerned may not be able to accurately detect the wave crest line. In this case, for the ship concerned, there may be a lack of hydrographic information. Therefore, when a navigation system of the ship concerned calculates a target route to a destination, there is a case where an optimal route taking hydrographic phenomena into consideration cannot be calculated. Note that, the optimal route is, for example, a shortest route to the destination or a route requiring least fuel consumption to reach the destination. Therefore, the lack of environmental information in the vicinity of the ship concerned is preferred to be as little as possible.

This disclosure is made in view of the above situations and aims to provide a ship environmental information detector, a route setting device, a method of detecting ship environmental information, and a program, which are capable of more surely and accurately detecting environmental information in the vicinity of a ship.

### [Summary of the Invention]

(1) For solving the above issues, a ship environmental information detector according to one aspect of this disclosure includes a first detecting module configured to detect predetermined first environmental information regarding the vicinity of a predetermined ship, a second detecting module configured to detect predetermined second environmental information regarding the vicinity of the predetermined ship, and a controlling module configured to control outputs of the first and second detecting modules based on the detection results of the first and second detecting modules, respectively.
(2) Preferably, the first detecting module includes an ocean wave detecting module configured to detect an ocean wave in the vicinity of the predetermined ship. Preferably, the second detecting module includes a tidal current detecting module configured to detect a tidal current in the vicinity of the predetermined ship.
(3) More preferably, the ocean wave detecting module is configured to detect a wave crest line occurred in the vicinity of the predetermined ship. More preferably, when the wave crest line is detected by the ocean wave detecting module, the controlling module outputs the detection result of the ocean wave detecting module to the outside of the ship environmental information detector, and when the wave crest line is not detected by the ocean wave detecting module, the controlling module outputs the detection result of the tidal current detecting module to the outside of the ship environmental information detector.
(4) Preferably, the ocean wave detecting module and the tidal current detecting module detect the ocean wave and the tidal current based on image data, respectively, the image data generated based on reception signals obtained by detecting over the vicinity of the predetermined ship with predetermined detection signals.
(5) For solving the above issues, a route setting device according to one aspect of this disclosure includes the ship environmental information detector described above, and a route setting module configured to set a target route of the predetermined ship based on the respective outputs of the first and second detecting modules controlled by the controlling module.
(6) For solving the above issues, a method of detecting ship environmental information according to one aspect of this disclosure includes a first detecting step for detecting predetermined first environmental information regarding the vicinity of a predetermined ship, a second detecting step for detecting predetermined second environmental information regarding the vicinity of the predetermined ship, and a controlling step for controlling outputs of the first and second detecting steps based on the detection results of the first and second detecting steps, respectively.
(7) For solving the above issues, a program according to one aspect of this disclosure includes a first detecting step for detecting predetermined first environmental information regarding the vicinity of a predetermined ship, a second detecting step for detecting predetermined second environmental information regarding the vicinity of the predetermined ship, and a controlling step for controlling outputs of the first and second detecting steps based on the detection results of the first and second detecting steps, respectively.

### Effect(s) of the Invention

According to this disclosure, environmental information in the vicinity of a ship can be detected more surely and accurately.

### BRIEF DESCRIPTION OF DRAWING(S)

Fig. 1 is a schematic view illustrating a state where a ship provided with a radar apparatus according to one embodiment of this disclosure is traveling on the sea.
Fig. 2 is a block diagram schematically illustrating a configuration of the radar apparatus.
Fig. 3 is a schematic view illustrating one example of an image specified based on image data.
Fig. 4 is a flowchart illustrating one example of a flow of processing performed at a signal processing device of the radar apparatus.

### MODE(S) FOR CARRYING OUT THE INVENTION

Hereinafter, one mode for carrying out this disclosure is described with reference to the drawings. This disclosure is broadly applicable as ship environmental information detectors, route setting devices, methods of detecting ship environmental information, and programs.

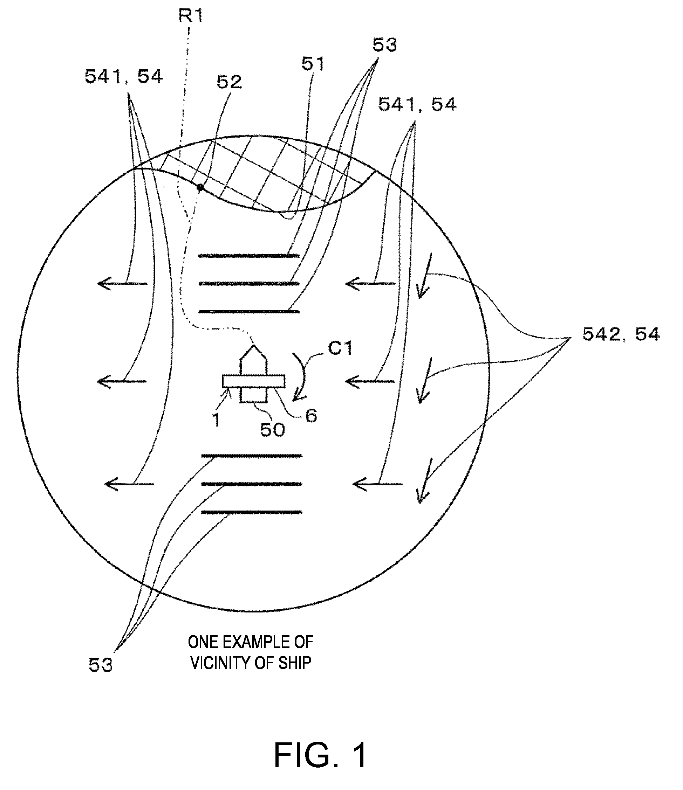

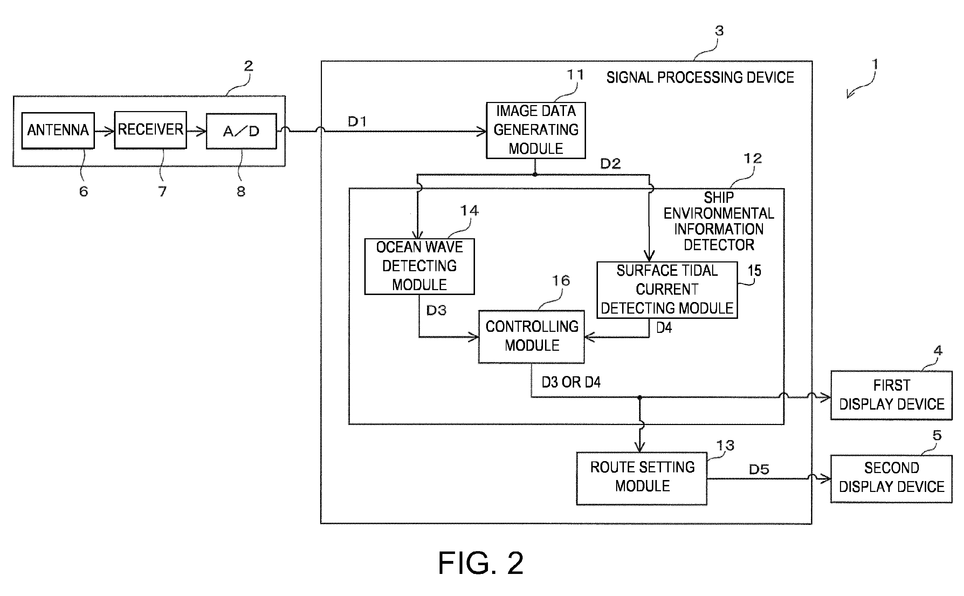

Fig. 1 is a schematic view illustrating a state where a ship provided with a radar apparatus 1 according to one embodiment of this disclosure is traveling on the sea. In Fig. 1, a circular area indicates the ship and the vicinity of this ship. Fig. 2 is a block diagram illustrating a schematic configuration of the radar apparatus 1.

With reference to Fig. 1, in this embodiment, the ship provided with the radar apparatus 1 is referred to as the ship 50. The ship 50 is one example of a "predetermined ship" of this disclosure. Fig. 1 illustrates the state where the ship 50 is traveling on the sea to a destination 52 of a land 51, and wave crest lines 53 caused by ocean waves in the vicinity of the ship 50, and surface tidal currents 54 (541 and 542) occur.

Each of the wave crest lines 53 indicates crests of waves substantially continuously appearing in a long string shape and water bubbles caused thereby. A direction of each of the surface tidal currents 54 (541 and 542) are different in each marine area. In this embodiment, the surface tidal current 541 is a tidal current oriented to a port side from a starboard side of the ship 50, and the surface tidal current 542 is a tidal current oriented to a stern side from a bow side of the ship 50. The ship 50 is a large-size ship, such as a tanker, and travels to the destination 52 of the land 51 by following a predetermined target route R1.

The radar apparatus 1 is provided to acquire information required for the navigation of the ship 50, by transmitting and receiving microwaves (electromagnetic waves). The radar apparatus 1 is provided to the ship 50.

With reference to Figs. 1 and 2, the radar apparatus 1 includes an antenna device 2, a signal processing device 3, a first display device 4, and a second display device 5.

The antenna device 2 includes an antenna 6, a receiver 7, and an A/D converter 8.

The antenna 6 is a radar antenna capable of transmitting pulse-shaped radio waves having a strong directivity, as transmission signals (detection signals). Further, the antenna 6 is configured to receive reception signals including an echo signal (reflection wave) from a target object, etc.

Note that, the radar apparatus 1 measures a period of time from a transmission of the pulse-shaped radio wave until the reception of the echo signal. Thus, the radar apparatus 1 can detect a distance r to the target object.

The antenna 6 is configured to be capable of rotating 360° on a horizontal plane, and rotates in an azimuth direction C1 about a vertical axis. The antenna 6 is configured to repeat the transmission and reception of the signals while changing the transmitting direction of the transmission signal (while changing a rotational angle of the antenna 6). With the above configuration, the radar apparatus 1 can detect over 360° within a range of a few nautical miles in the vicinity of the ship 50.

Note that, in this embodiment, operation performed from a transmission of the pulse-shaped radio wave until the next transmission of the pulse-shaped radio wave is referred to as the "sweep." Further, the operation of rotating 360° the antenna while performing the transmission and reception of the radio waves is referred to as the "scan."

The receiver 7 detects the reception signals received by the antenna 6 and amplifies them. The reception signals include the echo signal and a noise signal. The echo signal is, among signals received by the antenna 6, a reflection wave on the target object, a sea surface, etc., caused by the transmission signal. The receiver 7 outputs the amplified echo signal to the A/D converter 8.

The A/D converter 8 samples the echo signal in analog format and converts it into digital data (echo data D1) comprised of a plurality of bits. In this embodiment, the echo data D1 includes data for identifying an intensity (signal level) of the echo signal received by the antenna 6. The A/D converter 8 outputs the echo data D1 to the signal processing device 3.

The signal processing device 3 is one example of the "route setting device" of this disclosure. The signal processing device 3 is configured to detect environmental information in the vicinity of the ship 50. Note that, the environmental information indicates hydrographic phenomena, etc., in the vicinity of the ship 50. The signal processing device 3 is configured to calculate the target route R1 from a current position of the ship 50 to the destination 52 while referring to the detected environmental information. The signal processing device 3 is formed by using a CPU, a RAM, a ROM, etc.

The signal processing device 3 includes an image data generating module 11, a ship environmental information detector 12, and a route setting module 13.

The image data generating module 11 is configured to generate image data D2 based on the echo data D1 outputted from the A/D converter 8. The image data generating module 11 sets an r-θ coordinate system centering on the ship 50. "r" is a variable indicating a distance from the ship 50. "θ" is, for example, an angle in the azimuth direction C1 by having the bow direction of the ship 50 as θ=zero.

The image data generating module 11 detects the signal level of the echo signal within a plurality of ranges regularly set in the r-θ coordinate system. As a result, the image data generating module 11 generates the image data in the r-θ coordinate system.

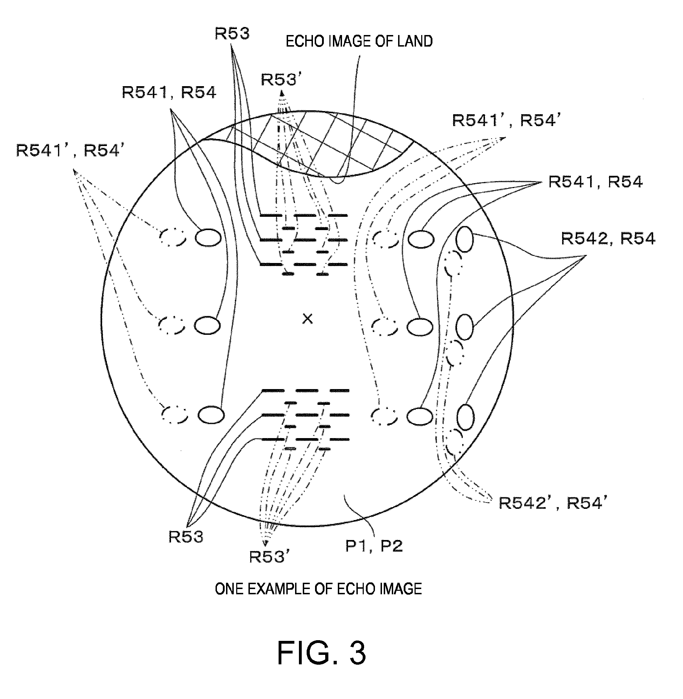

Next, the image data generating module 11 generates the image data D2 in an x-y coordinate system by performing a coordinate conversion on the image data in the r-θ coordinate system. The x-axial direction, for example, corresponds to East-and-West directions with respect to the ship 50, and the y-axial direction, for example, corresponds to South-and-North directions. Fig. 3 illustrates one example of an image P1 specified based on the image data D2.

Fig. 3 is a schematic view illustrating one example of the image P1 specified based on the image data D2. With reference to Figs. 1 to 3, in the image P1, string-shaped ranges R53 where the signal intensity is above a predetermined threshold (noise level) are formed in ranges corresponding to the wave crest lines 53, respectively. Further, the image P1 is formed with a plurality of ranges R54 (R541 and R542) due to sea surface reflections (sea clutters). Signal intensities in the ranges R54 (R541 and R542) are above the predetermined threshold (noise level).

The image data generating module 11, for example, generates the image data D2 by using the echo data D1 obtained in a single scan. The image data generating module 11 generates the image data D2 for every echo data D1 obtained in a single scan. Thus, the image data generating module 11 generates the image data D2 for every single scan.

Fig. 3 illustrates the image P1 based on the echo data D1 at a certain n-th scan timing (n is a natural number). Fig. 3 also illustrates an image P2 based on the echo data D1 at an (n+1)-th scan timing. The image P2 is different from the image P1 in that positions of ranges R54' (R541' and R542') and R53' in the image P2 are different from those of the corresponding ranges R54 (R541 and R542) and R53 in the image P1.

By the above configuration, the image data generating module 11 generates the image data D2 based on the reception signal obtained by detecting over the vicinity of the ship 50 with the detection signal. The image data generating module 11 outputs the generated image data D2 to an ocean wave detecting module 14 and a surface tidal current detecting module 15, which are described later, of the ship environmental information detector 12.

The ship environmental information detector 12 (hereinafter, may also be referred to as the environmental information detector) is provided to detect hydrographic phenomena (environmental information) in the vicinity of the ship 50. Note that, "the vicinity of the ship 50" means a marine area directly related to energy consumption during the travel of the ship 50, for example, an area from the ship 50 to about 8 nautical miles therefrom. In this embodiment, the environmental information detector 12 is configured to detect the ocean wave and the surface tidal currents 54 (541 and 542) in the vicinity of the ship 50.

The environmental information detector 12 includes the ocean wave detecting module 14, the surface tidal current detecting module 15, and a controlling module 16.

The ocean wave detecting module 14 and the surface tidal current detecting module 15 are used to measure a direction of wind in the vicinity of the ship 50.

The ocean wave detecting module 14 is one example of a "first detecting module" of this disclosure. The ocean wave detecting module 14 is configured to detect the ocean wave in the vicinity of the ship 50. The ocean wave is one example of "first environmental information" of this disclosure. Specifically, the ocean wave detecting module 14 is configured to detect the wave crest line 53 occurred in the vicinity of the ship 50.

The ocean wave detecting module 14, for example, reads the image data D2 of the n-th scan timing. Next, the ocean wave detecting module 14 searches, from the image P1 specified based on the image data D2, the range R53 which is a range where the signal intensities are above the predetermined threshold and has the long string shape. The ocean wave detecting module 14 determines this range as the wave crest line 53. Note that, the above-described detection method of the wave crest line 53 is an example, and other detection methods may be adopted. The ocean wave detecting module 14, upon detecting the wave crest line 53, detects an ocean wave (height, occurring cycle, direction, etc. of the wave) by ocean wave analysis (ocean wave radar) using 3-dimensional FFT based on the image data D2 of a plurality of scan timings. The ocean wave detecting module 14 outputs, to the controlling module 16, ocean wave data D3 as the detection result of the ocean wave detecting module 14.

The surface tidal current detecting module 15 is one example of a "second detecting module" of this disclosure. The surface tidal currents 54 (541 and 542) are examples of "second environmental information" of this disclosure. The surface tidal current detecting module 15 is configured to detect the surface tidal currents 54 (541 and 542) of the sea in the vicinity of the ship 50. In this embodiment, the surface tidal current is a tidal current within a range from the sea surface to about 10m in water depth.

The surface tidal current detecting module 15, for example, refers to a plurality of image data D2 of different scan timings. Next, the surface tidal current detecting module 15 changes the positions of the range R541 of the wave crest in the image P1 and the range R541' of the wave crest in the image P2. Thereby, the surface tidal current detecting module 15 detects the surface tidal current 541 corresponding to the ranges R541 and R541'. Similarly, the surface tidal current detecting module 15 detects the surface tidal current 542 corresponding to the ranges R542 and R542'. Thus, the surface tidal current detecting module 15 utilizes the motion detection of the dot echoes based on optical flow, etc. In other words, the surface tidal current detecting module 15 utilizes wave crest flow analysis (surface tidal current radar).

Thus, the surface tidal current detecting module 15 detects the surface tidal currents 54 (541 and 542) at a plurality of positions in the vicinity of the ship 50. The surface tidal current detecting module 15 outputs, to the controlling module 16, surface tidal current data D4 for identifying the detected surface tidal currents 54 (541 and 542).

Based on the ocean wave data D3 (the detection result of the ocean wave detecting module 14) and the surface tidal current data D4 (the detection result of the surface tidal current detecting module 15), the controlling module 16 is configured to control the outputs of the data D3 and D4.

Specifically, in a case where the ocean wave data D3 is provided by the ocean wave detecting module 14, the controlling module 16 outputs the ocean wave data D3 to the route setting module 13 and the first display device 4. On the other hand, in a case where the ocean wave data D3 is not provided by the ocean wave detecting module 14, the controlling module 16 outputs the surface tidal current data D4 to the route setting module 13 and the first display device 4.

Note that, as the case where the controlling module 16 is not provided the ocean wave data D3 by the ocean wave detecting module 14, for example, a case where the intensities of the reception signals from the wave crest line 53 are low and, thus, the ocean wave detecting module 14 cannot detect this wave crest line 53 is considered. On the other hand, the surface tidal currents 54 (541 and 542) can comparatively surely be detected because the detection result of a plurality of sea clutters which occur in the vicinity of the ship 50 is used. Thus, even when the wave crest line 53 is not detected by the ocean wave detecting module 14, the surface tidal currents 54 (541 and 542) can be detected by the surface tidal current detecting module 15.

Note that, to navigate the ship 50 efficiently in view of saving energy, it is preferred to navigate the ship 50 while considering the status of the ocean wave. For this, it is preferred to preferentially use the information of the ocean wave compared to the information of the surface tidal currents 54 (541 and 542) in setting the target route R1. Therefore, the controlling module 16 preferentially outputs the ocean wave data D3 compared to the surface tidal current data D4.

The controlling module 16 outputs one of the ocean wave data D3 and the surface tidal current data D4 to the route setting module 13 and the first display device 4.

The route setting module 13 is configured to calculate the target route R1 from the current position of the ship 50 to the destination 52. The route setting module 13 is, for example, configured to be capable of receiving signals from non-illustrated artificial satellites of a GNSS (Global Navigation Satellite System). The signals are, for example, outputted to the route setting module 13 via a non-illustrated receiver from the artificial satellites. Further, the route setting module 13 receives one of the ocean wave data D3 and the surface tidal current data D4 as described above.

The route setting module 13 calculates coordinates of the current position of the ship 50 and coordinates of the destination 52 based on the signals from the artificial satellites. Further, the route setting module 13 refers to the one of the ocean wave data D3 and the surface tidal current data D4. The route setting module 13 sets the target route R1 to avoid a position where resisting force of the ship 50 against the sea is large, based on one of the ocean wave identified by the ocean wave data D3 and the surface tidal currents 54 (541 and 542) identified by the surface tidal current data D4. One example of the target route R1 is illustrated in Fig. 1. Fig. 1 illustrates, as an example, a state where the target route R1 is set to avoid the wave crest lines 53.

Note that, in Fig. 1, a state where the target route R1 is set using the ocean wave data D3 is illustrated. In the case where the ocean wave data D3 is not provided to the route setting module 13, in other words, the surface tidal current data D4 is provided to the route setting module 13, the route setting module 13, for example, sets the target route R1 so that the ship 50 rides the surface tidal current 541 moving in a direction which forms a smallest angle with the direction oriented to the destination 52 from the current position of the ship 50. The route setting module 13 outputs target route data D5 for identifying the set target route R1, to the second display device 5.

Each of the first and second display devices 4 and 5 is, for example, a liquid crystal display device. Note that in this embodiment, the first and second display devices 4 and 5 are described as separate display devices; however, it is not limited to this. For example, display contents of the first display device 4, and display contents of the second display device 5 may all be displayed on the same display device.

The first display device 4, upon receiving the ocean wave data D3 from the controlling module 16, displays coordinates of the wave crest line 53, etc., identified by the ocean wave data D3. Thus, an operator of the radar apparatus 1 can know the status of the ocean waves in the vicinity of the ship 50. Moreover, the first display device 4, upon receiving the surface tidal current data D4 from the controlling module 16, displays coordinates of the surface tidal currents 54 (541 and 542), etc., identified by the surface tidal current data D4. Thus, the operator of the radar apparatus 1 can know the directions of the surface tidal currents 54 (541 and 542), etc., in the vicinity of the ship.

The second display device 5 has a PPI (Plan Position Indicator) scope, for example. The PPI scope is configured to 2-dimensionally display a location of the target object by a scanning line rotating on a circular display range. The second display device 5 displays the position of the ship 50, the position of the destination 52, and the target route R1, based on the target route data D5 provided by the route setting module 13. Note that, the image P1 based on the image data D2 generated by the image data generating module 11 may be displayed on the PPI screen. The operator of the radar apparatus 1 can know the target route R1 from the current position of the ship 50 to the destination 52 by referring to the second display device 5. Note that, the second display device 5 may have a configuration other than the PPI scope.

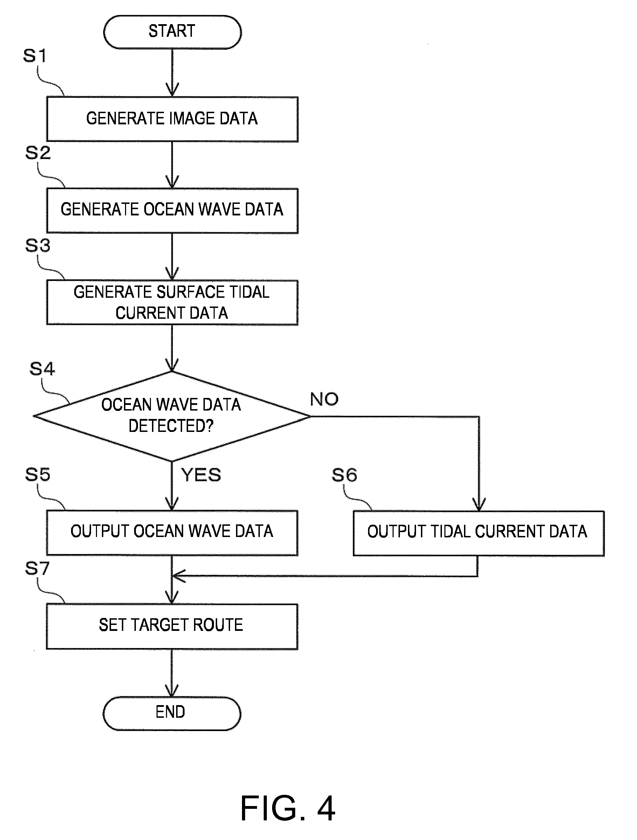

Fig. 4 is a flowchart illustrating one example of a flow of processing performed at the signal processing device 3 of the radar apparatus 1. Note that, hereinafter, drawings other than Fig. 4 are also suitably referred to when describing the flow of the processing at the radar apparatus 1.

The signal processing device 3 executes respective steps in the flowchart described below, by reading them from a memory not illustrated. The program can be installed externally. The program to be installed is distributed stored in a memory medium, for example.

At the signal processing device 3, first, the image data generating module 11 generates the image data D2 by using the echo data D1 provided by the A/D converter 8 (S1). Next, the ocean wave detecting module 14 generates the ocean wave data D3 by using the image data D2 (S2); however, when the ocean wave detecting module 14 cannot detect the wave crest line 53, it does not generate the ocean wave data D3.

Further, the surface tidal current detecting module 15 generates the surface tidal current data D4 by using the image data D2 of a plurality of scan timings (S3).

Next, the controlling module 16 determines whether the ocean wave is detected (S4). Specifically, the controlling module 16 determines whether the ocean wave data D3 is provided by the ocean wave detecting module 14.

If the ocean wave data D3 is provided (YES at S4), in other words, if the wave crest line 53 is detected by the ocean wave detecting module 14, the controlling module 16 outputs the ocean wave data D3 (the detection result of the ocean wave detecting module 14) to the outside of the environmental information detector 12 (S5). In this case, in this embodiment, the controlling module 16 outputs the ocean wave data D3 to the route setting module 13 and the first display device 4.

On the other hand, if the ocean wave data D3 is not provided (NO at S4), in other words, if the wave crest line 53 is not detected by the ocean wave detecting module 14, the controlling module 16 outputs the surface tidal current data D4 (the detection result of the surface tidal current detecting module 15) to the outside of the environmental information detector 12 (S6). In this case, in this embodiment, the controlling module 16 outputs the surface tidal current data D4 to the route setting module 13 and the first display device 4.

The route setting module 13 sets (calculates) the target route R1 of the ship 50 by using the one of the ocean wave data D3 and the surface tidal current data D4 which are provided by the controlling module 16, and the data provided by the GNSS satellites (S7).

[Program] The program for the signal processing device 3 of the radar apparatus 1 of this embodiment may be a program configured to cause a computer to execute the processing of the signal processing device 3. By installing the program into the computer and executing it, the signal processing device (route setting device) 3 and a method of detecting ship environmental information of this embodiment can be achieved. In this case, a CPU (Central Processing Unit) of the computer functions as the image data generating module 11, the environmental information detector 12 (ocean wave detecting module 14, surface tidal current detecting module 15, controlling module 16), and the route setting module 13, and the computer performs the processing. Note that, the signal processing device 3 may be achieved by the cooperation between the software and hardware as this embodiment, or may be achieved by hardware.

As described above, the environmental information detector 12 according to this embodiment includes the ocean wave detecting module 14 configured to detect the ocean wave in the vicinity of the ship 50, the surface tidal current detecting module 15 configured to detect the surface tidal currents 54 (541 and 542) in the vicinity of the ship 50, and the controlling module 16 configured to control the outputs of the detecting modules 14 and 15 based on the detection results of the detecting modules 14 and 15. According to such a configuration, the controlling module 16 can select the data more suitable in grasping the environmental information in the vicinity of the ship 50, from the ocean wave data D3 generated by the ocean wave detecting module 14 and the surface tidal current data D4 generated by the surface tidal current detecting module 15.

As above, the controlling module 16 selects more suitable data from the plurality of data D3 and D4. Thus, the environmental information detector 12 can select one of the detection results of the plurality of detecting modules 14 and 15 having different observing methods, according to the environment in the vicinity of the ship 50. Therefore, the environmental information detector 12 can more surely and accurately detect the environmental information in the vicinity of the ship 50.

Moreover, according to the environmental information detector 12, when the wave crest line 53 is detected by the ocean wave detecting module 14, the controlling module 16 outputs the ocean wave data D3 to the outside of the environmental information detector 12. Furthermore, when the wave crest line 53 is not detected by the ocean wave detecting module 14, the controlling module 16 outputs the surface tidal current data D4 to the outside of the environmental information detector 12. According to such a configuration, the ocean wave data D3 of the ocean wave that causes great influence on the navigation of the ship 50 is preferentially outputted to the first display device 4 and the route setting module 13. As a result, optimal data for efficient navigation of the ship 50 can be provided to the operator of the radar apparatus 1 and the route setting module 13.

Moreover, according to the environmental information detector 12, the ocean wave detecting module 14 and the surface tidal current detecting module 15 detect the ocean wave and the surface tidal currents 54 (541 and 542) based on the image data D2, respectively, the image data D2 generated based on the reception signals obtained by detecting over the vicinity of the ship 50 with the electromagnetic waves as the detection signals. With such a configuration, the ocean wave detecting module 14 and the surface tidal current detecting module 15 detect the ocean wave and the surface tidal currents, respectively, by using the same observation result (image data D2), in other words, based on the same motion of the sea surface. When the ocean wave detecting module 14 can detect the wave crest line 53, the controlling module 16 generates the ocean wave data D3 and outputs the ocean wave data D3. Moreover, when it is difficult for the ocean wave detecting module 14 to detect the wave crest line 53, the controlling module 16 outputs the surface tidal current data D4. Thus, the hydrographic phenomena on the same sea surface can be observed by an optimal method among different methods. Further, each of the ocean wave detecting module 14 and the surface tidal current detecting module 15 can detect the ocean wave and the surface tidal currents 54 (541 and 542) by image processing. Thus, the ocean wave detecting module 14 and the surface tidal current detecting module 15 can be achieved by using a computer. Furthermore, with the configuration for detecting over the vicinity of the ship 50 by using microwaves, the antenna 6 configured to measure the hydrographic phenomena in the vicinity of the ship 50 can be reduced in size. Thus, the degree of freedom in the arrangement of the antenna 6 can be increased in a ship where space for installing instruments is generally highly regulated.

Moreover, according to the signal processing device 3, the route setting module 13 sets the target route R1 to the destination 52 of the ship 50 by using one of the ocean wave data D3 and the surface tidal current data D4 of which outputs are controlled by the controlling module 16. By such a configuration, regarding the setting of the target route R1, the route setting module 13 can set a more efficient target route R1 while taking the hydrographic phenomena in the vicinity of the ship 50 into consideration.

Although the embodiment of this disclosure is described above, this disclosure is not limited to the embodiment described above. This disclosure may be variously modified within the described range of the claims. For example, this disclosure may be implemented modified as follows.
(1) In the embodiment described above, the mode in which the surface tidal current detecting module generates the tidal current data regardless of the ocean wave data being generated by the ocean wave detecting module is described as an example. However, it is not limited to this. For example, the surface tidal current detecting module may generate the surface tidal current data only when the ocean wave data is not generated by the ocean wave detecting module.
(2) Further, in the embodiment described above, the mode in which the controlling module selectively outputs one of the ocean wave data and the tidal current data is described as an example. However, it is not limited to this. For example, when both of the ocean wave data and the tidal current data are generated, the controlling module may output both of them. In this case, the controlling module selects from or integrates the output results of the ocean wave detecting module and the tidal current detecting module, according to the environment in the vicinity of the ship. Thus, the plurality of detecting modules can compensate each other. In this case, the controlling module may weight the ocean wave data and the surface tidal current data by different coefficients, respectively, and output them.
(3) Moreover, in the embodiment described above, the mode in which the ocean wave and the surface tidal currents are detected as the environmental information in the vicinity of the ship is described as an example. However, it is not limited to this. As the environmental information in the vicinity of the ship, other phenomena (hydrographic phenomena), such as a wave height, may be detected.
(4) Further, in this embodiment, the mode in which two environmental information of the ocean wave and the surface tidal currents are detected is described as an example, the ocean wave being the first environmental information of this disclosure, the surface tidal currents being the second environmental information of this disclosure. However, it is not limited to this. For example, the first and second environmental information of this disclosure may be the same. For example, when both of the first and second environmental information indicate ocean wave, a wave crest line detecting module configured to detect a movement of a wave crest line, and a wave crest detecting module configured to detect a movement of the wave crest may be provided. Further, when the wave crest line is detected by the wavelength detecting module, the detection result of the wave crest line detecting module is outputted to the controlling module. When the wave crest line cannot be detected by the wavelength detecting module, the detection result of the wave crest detecting module is outputted to the controlling module. Note that, in this case, by using the result of one of the wave crest line detecting module and the wave crest detecting module, the result to be detected by the other one of the wave crest line detecting module and the wave crest detecting module may be estimated.
(5) Moreover, in the embodiment described above, the mode in which the data required for the processings at the ship environmental information detector and the route setting device is acquired by using the radar detection utilizing the microwaves is described as an example. However, it is not limited to this. For example, data required for the processings at the ship environmental information detector and the route setting device may be acquired by using data from a meteorological satellite, a host computer of a ship company of the ship, etc.

### INDUSTRIAL APPLICABILITY

This disclosure is broadly applicable as ship environmental information detectors, route setting devices, methods of detecting ship environmental information, and programs.

### DESCRIPTION OF REFERENCE NUMERAL(S)

3 Signal Processing Device (Route Setting Device)
12 Ship Environmental Information Detector
13 Route Setting Module
14 Ocean Wave Detecting Module (First Detecting Module)
15 Surface Tidal Current Detecting Module (Second Detecting Module, Tidal Current Detecting Module)
16 Controlling Module
50 Ship (Predetermined Ship)
53 Wave Crest Line
D2 Image Data
D3 Ocean Wave Data (Detection Result of Ocean Wave Detecting Module)
D4 Surface Tidal Current Data (Detection Result of Tidal Current Detecting Module)
R1 Target Route

## Claims

1. A ship environmental information detector, comprising:
a first detecting module configured to detect predetermined first environmental information regarding the vicinity of a predetermined ship;
a second detecting module configured to detect predetermined second environmental information regarding the vicinity of the predetermined ship; and
a controlling module configured to control outputs of the first and second detecting modules based on the detection results of the first and second detecting modules, respectively.

2. The ship environmental information detector of claim 1, wherein the first detecting module includes an ocean wave detecting module configured to detect an ocean wave in the vicinity of the predetermined ship, and
wherein the second detecting module includes a tidal current detecting module configured to detect a tidal current in the vicinity of the predetermined ship.

3. The ship environmental information detector of claim 2, wherein the ocean wave detecting module is configured to detect a wave crest line occurred in the vicinity of the predetermined ship, and
wherein when the wave crest line is detected by the ocean wave detecting module, the controlling module outputs the detection result of the ocean wave detecting module to the outside of the ship environmental information detector, and when the wave crest line is not detected by the ocean wave detecting module, the controlling module outputs the detection result of the tidal current detecting module to the outside of the ship environmental information detector.

4. The ship environmental information detector of claim 2 or 3, wherein the ocean wave detecting module and the tidal current detecting module detect the ocean wave and the tidal current based on image data, respectively, the image data generated based on reception signals obtained by detecting over the vicinity of the predetermined ship with predetermined detection signals.

5. A route setting device, comprising:
the ship environmental information detector of any one of claims 1 to 4; and
a route setting module configured to set a target route of the predetermined ship based on the respective outputs of the first and second detecting modules controlled by the controlling module.

6. A method of detecting ship environmental information, comprising:
a first detecting step for detecting predetermined first environmental information regarding the vicinity of a predetermined ship;
a second detecting step for detecting predetermined second environmental information regarding the vicinity of the predetermined ship; and
a controlling step for controlling outputs of the first and second detecting steps based on the detection results of the first and second detecting steps, respectively.

7. A program for causing a computer to execute:
a first detecting step for detecting predetermined first environmental information regarding the vicinity of a predetermined ship;
a second detecting step for detecting predetermined second environmental information regarding the vicinity of the predetermined ship; and
a controlling step for controlling outputs of the first and second detecting steps based on the detection results of the first and second detecting steps, respectively.
